# EUROPÄISCHE PATENTSCHRIFT

(11) **EP 2 022 680 B1**
(45) Veröffentlichungstag und Bekanntmachung des Hinweises auf die Patenterteilung: **03.03.2010**
(21) Anmeldenummer: 07114140.2
(22) Anmeldetag: 10.08.2007
(51) Int. Cl.: B60R 16/03, B60Q 1/04, B60Q 1/26

(54) **Beleuchtungsanordnung für ein Kraftfahrzeug mit einer Steuer- und/oder Regelvorrichtung zumindest einem Scheinwerfer und einem Feldbus**
Illumination assembly for a motor vehicle with one actuating and/or regulating device with at least one headlamp and a field bus
Agencement d'éclairage pour un véhicule automobile doté d'un dispositif de commande et/ou de régulation d'au moins un phare et d'un bus de terrain

(43) Veröffentlichungstag der Anmeldung: 11.02.2009
(73) Patentinhaber: Hella KGaA Hueck & Co., 59552 Lippstadt (DE)
(72) Erfinder: Lucas, Lars, 33100 Paderborn (DE); Drost, Malte, 59558 Lippstadt (DE)
(74) Vertreter: Downar, Michael

(56) Entgegenhaltungen:
- EP-A- 1 316 474
- EP-A- 1 593 936
- DE-A1-102004 060 880
- DE-T2- 60 200 395

## Beschreibung

Die Erfindung betrifft eine Beleuchtungsanordnung für ein Kraftfahrzeug mit einer Steuer- und/oder Regelvorrichtung, mit zumindest einem Scheinwerfer und mit einem Feldbus. Der zumindest eine Scheinwerfer und die Steuer- und/oder Regelvorrichtung sind zum Informationsaustausch über den Feldbus miteinander verbunden. Die Steuer- und/oder Regelvorrichtung ist geeignet und eingerichtet, direkt oder indirekt Sollwerte für die Leistung des Scheinwerfers vorzugeben. Der Scheinwerfer ist geeignet und eingerichtet, den von der Steuer- und/oder Regelvorrichtung vorgegebenen Sollwerte zu übernehmen.

Aus dem Stand der Technik sind verschiedene Beleuchtungsanordnungen für Kraftfahrzeuge der vorgenannten Art bekannt. Beispielsweise beschreibt die Druckschrift mit der Veröffentlichungsnummer DE 602 00 395 T2 eine Beleuchtungsanordnung für ein Kraftfahrzeug mit einer Steuervorrichtung und Scheinwerfern, die über Bussysteme miteinander verbunden sind. DE 10 2004 060880 A1 offenbart die Merkmalen des Oberbegriffs des Anspruchs 1.

In modernen Kraftfahrzeugen werden zunehmend Beleuchtungsanordnungen mit adaptiven Frontbeleuchtungssystemen (AFS) hergestellt. Mit den adaptiven Frontbeleuchtungssystemen sind die Beleuchtungsanordnungen in der Lage, die Beleuchtung der jeweiligen Fahrsituation anzupassen. Teil eines solchen adaptiven Frontbeleuchtungssystems kann beispielsweise das sogenannte Kurvenlicht sein. Ebenso können Scheinwerfer automatisch abgeblendet werden, um eine Blendung des Gegenverkehrs zu verhindern. Insbesondere für die Verhinderung der Blendung des Gegenverkehrs kann es notwendig sein, dass die Leistung der Scheinwerfer während des Betriebs des Kraftfahrzeugs verändert wird.

Grundsätzlich ist es denkbar, dass zur Veränderung der Leistung der Scheinwerfer von einer Steuer- und/oder Regelvorrichtung der Beleuchtungsanordnung diskrete Sollwerte an die Scheinwerfer übermittelt werden, auf die die Scheinwerfer dann die Leistung einstellen. Der Vorteil der Übermittlung von diskreten Sollwerten wäre, dass die Informationsmengen, die über den Feldbus zwischen der Steuer- und/oder Regelvorrichtung und den Scheinwerfern übertragen werden müssen, gering gehalten werden können.

Andererseits hat die Übermittlung von diskreten Sollwerten den Nachteil, dass sich die Leistung der Scheinwerfer sprunghaft ändert. Dieses wird insbesondere von dem Fahrer des Fahrzeugs mitunter als störend empfunden, insbesondere wenn die Änderung des Sollwertes beziehungsweise der Leistung der Scheinwerfer nicht von ihm willentlich herbeigeführt wird, wie es beim klassischen Abblenden beziehungsweise Ausschalten der Fernlichtscheinwerfer der Fall ist. Die kontinuierliche Übertragung von Sollwerten wäre daher vorteilhaft, erfordert aber eine größere über den Feldbus zu übertragende Informationsmenge.

Hier setzt die vorliegende Erfindung an.

Der Erfindung liegt die Aufgabe zugrunde, eine Beleuchtungsanordnung der eingangs genannten Art so weiterzubilden, dass einerseits eine sprunghafte Anpassung der Leistung vermieden und andererseits die zu übertragende Informationsmenge zwischen der Steuer- und/oder Regelvorrichtung und dem Scheinwerfer kleingehalten wird.

Diese Aufgabe wird erfindungsgemäß dadurch gelöst, dass die Steuer- und/oder Regelvorrichtung geeignet und eingerichtet ist, Kennwerte für einen zeitlichen Verlauf der Sollwerte zu ermitteln und diese Kennwerte an den Feldbus über eine Schnittstelle zu übergeben, und dass der Scheinwerfer geeignet und eingerichtet ist, die Kennwerte über eine Schnittstelle vom Feldbus zu übernehmen, aus den Kennwerten für den zeitlichen Verlauf der Sollwerte die Sollwerte zu ermitteln und die Leistung der Scheinwerfer entsprechend der Sollwerte einzustellen.

Durch die erfindungsgemäße Beleuchtungsanordnung und das Zusammenwirken der Steuer- und/oder Regelvorrichtung und der Scheinwerfer wird erreicht, dass die zu übertragenden Informationen, die zum Einstellen der Sollwerte für die Leistung der Scheinwerfer notwendig sind, gering gehalten wird. Gleichzeitig wird aber gewährleistet, dass eine sprunghafte Änderung der Leistung vermieden wird. Die Sollwerte haben einen zeitlichen Verlauf, der eine stetige Änderung der Leistung der Scheinwerfer ermöglicht.

Gemäß der Erfindung kann in einer erfindungsgemäßen Variante die Beleuchtungsanordnung geeignet und eingerichtet sein, als Kennwerte Stützpunkte einer Kurve des zeitlichen Verlaufs und/oder die Form der Kurve des zeitlichen Verlaufs zu ermitteln und über die Schnittstelle dem Feldbus zu übergeben. Die Scheinwerfer können dann geeignet und eingerichtet sein, aus den Stützpunkten und/oder der Form der Kurve den gewünschten zeitlichen Verlauf der Sollwerte zu ermitteln und die Leistung entsprechend dieses gewünschten Verlaufs einzustellen. Denkbar ist dabei, dass die Form der gewünschten Kurve dem Scheinwerfer bekannt ist und lediglich die Stützpunkte über den Feldbus zum Scheinwerfer übermittelt werden.

Bei einer erfindungsgemäßen Beleuchtungsanordnung ist es grundsätzlich denkbar, dass die Sollwerte zu einer Funktion gehören und dass die Steuer- und/oder Regelvorrichtung geeignet und eingerichtet ist, als Kennwerte charakteristische Parameter einer Funktionsgleichung und/oder Informationen über den Funktionstyp zu ermitteln und zu übermitteln. Auch in diesem Fall ist es denkbar, dass der Scheinwerfer den Funktionstyp kennt und lediglich die Parameter der Funktionsgleichung von der Steuer- und/oder Regelvorrichtung über den Feldbus zum Scheinwerfer übermittelt werden.

Ein Scheinwerfer einer erfindungsgemäßen Beleuchtungsanordnung kann einen Speicher aufweisen, in dem die Informationen über die Form der Kurve beziehungsweise den Typ der Funktion abgelegt sind. Der Typ der Funktion kann beispielsweise in Form einer Funktionsgleichung in dem Speicher des Scheinwerfers abgelegt sein.

In einem einfachen Fall einer erfindungsgemäßen Beleuchtungsanordnung ist es denkbar, dass die Steuer- und/oder Regelvorrichtung als Kennwerte Stützpunkte des Kurvenverlaufs ermittelt und an den Feldbus übergibt. Der Scheinwerfer kann geeignet und eingerichtet sein, Sollwerte entsprechend eines linearen Kurvenverlaufs zwischen den von der Steuer- und/oder Regelvorrichtung übermittelten Stützpunkten zu ermitteln. In diesem Fall ist in dem Scheinwerfer die Information niedergelegt, dass der Kurvenverlauf zwischen den Stützpunkten stets linear erfolgt.

Bei dem Feldbus einer erfindungsgemäßen Beleuchtungsanordnung kann es sich um einen LIN-Bus, aber auch um einen CAN-Bus handeln.

Eine erfindungsgemäße Beleuchtungsanordnung für ein Kraftfahrzeug mit einer Steuer- und/oder Regelvorrichtung, zwei Scheinwerfern und einem Feldbus ist anhand der Zeichnungen näher beschrieben. Es zeigt
- Fig. 1: eine schematische Darstellung der erfindungsgemäßen Beleuchtungsanordnung und
- Fig. 2: einen Verlauf einer Sollwertkurve, wie sie in einem Scheinwerfer ermittelt wird.

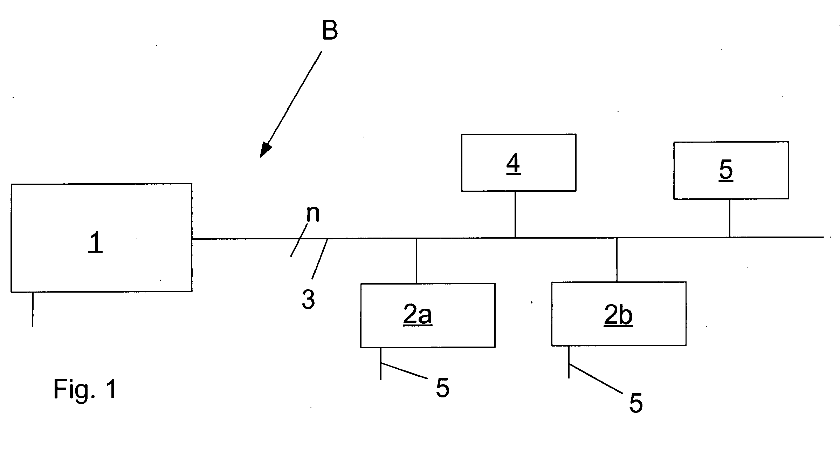

Die in Fig. 1 schematisch dargestellte Beleuchtungsanordnung für ein Kraftfahrzeug weist die Steuer- und/oder Regelvorrichtung 1, einen ersten Scheinwerfer 2a, einen zweiten Scheinwerfer 2b und den Feldbus 3 auf. Sowohl die Steuer- und/oder Regelvorrichtung als auch die Scheinwerfer 2a, 2b sind über Schnittstellen mit dem Feldbus 3 verbunden. Außerdem sind weitere Komponenten 4, 5 mit dem Feldbus über Schnittstellen verbunden. Bei diesen weiteren Komponenten kann es sich beispielsweise um Sensoren handeln.

Die Steuer- und/oder Regelvorrichtung 1, die Scheinwerfer 2a, 2b und die Sensoren 4, 5 sind dazu eingerichtet, dass Informationen zwischen diesen Komponenten 1, 2a, 2b, 4, 5 über den Feldbus 3 ausgetauscht werden können. Der Feldbus 3 hat dazu eine Anzahl von N-Drähten. Bei dem Feldbus kann es sich insbesondere um einen sogenannten LIN-Bus handeln.

Die Scheinwerfer 2a, 2b weisen zusätzlich zu der Schnittstelle als weitere Verbindung zur Umgebung einen Anschluss für eine Versorgungsspannung auf.

Bei modernen Kraftfahrzeugen mit Beleuchtungsanordnungen mit einem adaptiven Frontbeleuchtungssystem (AFS) ist es notwendig, dass die Leistung von Scheinwerfern, zum Beispiel eines Xenon-Abblendlichts eingestellt wird. Die Einstellung erfolgt dabei über den Feldbus 3 mittels der Steuer- und/oder Regelvorrichtung.

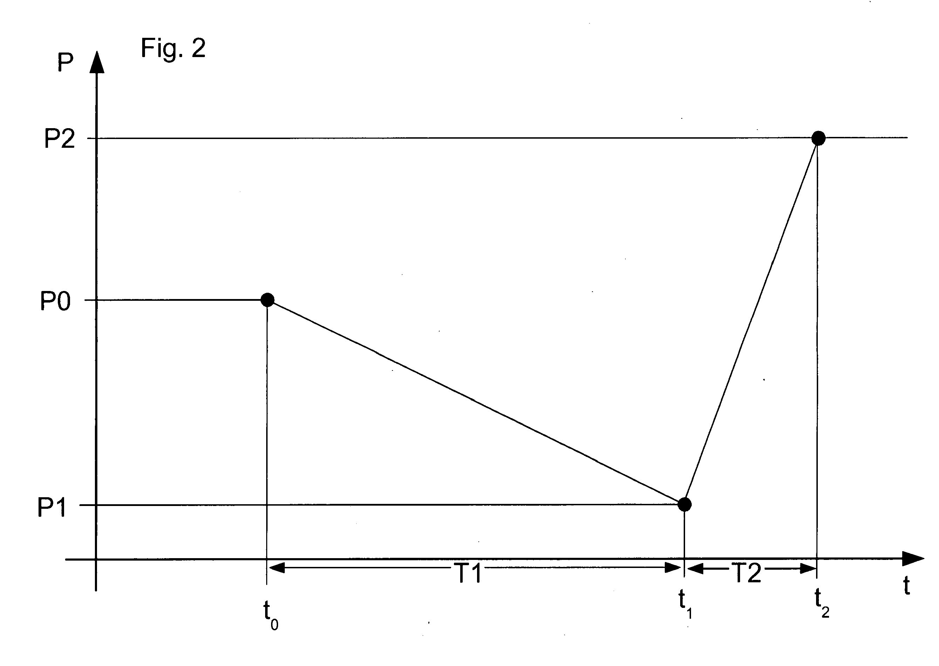

Damit ein sprunghafter Verlauf der Sollwerte vermieden wird, ist es bei Beleuchtungsvorrichtungen nach dem Stand der Technik notwendig, dass die Sollwerte, die von der Steuer- und/oder Regelvorrichtung 1 vorgegeben werden mit einer hohen zeitlichen Auflösung über den Feldbus 3 zu den Scheinwerfern 2a, 2b gegeben werden. Da die Bandbreite des Feldbusses 3 begrenzt ist, ist zur Minimierung der für die Übermittlung der Sollwerte zu übertragenden Informationsmenge erfindungsgemäß vorgesehen, dass lediglich Stützpunkte P0, t0; P1, t1; P2, t2 von der Steuer- und/oder Regelvorrichtung 1 über den Feldbus 3 zu den Scheinwerfern 2a, 2b übermittelt werden. Die Scheinwerfer 2a, 2b sind so programmiert, dass der Verlauf der Sollwerte P zwischen den Stützpunkten P0, t0; P1, t1, P2, t2 linear interpoliert wird (Fig. 2). Im Scheinwerfer wird dadurch eine Kurve erzeugt, welche den von der Steuer- und/oder Regelvorrichtung 1 gewünschten Sollwertverlauf für die Leistung P der Scheinwerfer vorgibt.

Durch das erfindungsgemäße Verfahren wird die Informationsmenge, die über den Feldbus 3 zu übertragen ist, erheblich minimiert.

### Bezugszeichenliste

- 1: Regelvorrichtung
- 2a, 2b: Scheinwerfer
- 3: Feldbus
- 4, 5: Sensoren
- P0, t0; P1, t1; P2, t2: Stützpunkte
- P: Leistung

## Patentansprüche

1. Beleuchtungsanordnung (B) für ein Kraftfahrzeug mit einer Steuer- und/oder Regelvorrichtung (1), zumindest einem Scheinwerfer (2a, 2b) und einem Feldbus (3), über den der Scheinwerfer (2a, 2b) und die Steuer- und/oder Regelvorrichtung (1) zum Informationsaustausch miteinander verbunden sind, wobei die Steuer- und/oder Regelvorrichtung (1) geeignet und eingerichtet ist, direkt oder indirekt Sollwerte (P) für die Leistung des Scheinwerfers (2a, 2b) vorzugeben und wobei der Scheinwerfer (2a, 2b) geeignet und eingerichtet ist, den von der Steuer- und/oder Regelvorrichtung (1) vorgegebenen Sollwert zu übernehmen,
**dadurch gekennzeichnet,**
**dass** die Steuer und/oder Regelvorrichtung (1) geeignet und eingerichtet ist, Kennwerte für einen zeitlichen Verlauf der Sollwerte zu ermitteln und diese Kennwerte an den Feldbus (3) über eine Schnittstelle zu übergeben, und dass der Scheinwerfer (2a, 2b) geeignet und eingerichtet ist, die Kennwerte über eine Schnittstelle vom Feldbus (3) zu übernehmen, aus den Kennwertens für den zeitlichen Verlauf der Sollwerte (P) die Sollwerte (P) zu ermitteln und die Leistung der Scheinwerfer (2a, 2b) entsprechend der Sollwerte (P) einzustellen.

2. Beleuchtungsanordnung nach Anspruch 1, **dadurch gekennzeichnet, dass** die Steuer- und/oder Regelvorrichtung (1) geeignet und eingerichtet ist, als Kennwerte Stützpunkte (P0, t0; P1, t1; P2, t2) einer Kurve des zeitlichen Verlaufs und/oder die Form der Kurve des zeitlichen Verlaufs zu ermitteln und zu übermitteln.

3. Beleuchtungsanordnung nach Anspruch 1 oder 2, **dadurch gekennzeichnet, dass** die Sollwerte (P) zu einer Funktion gehören und dass die Steuer- und/oder Regelvorrichtung (1) geeignet und eingerichtet ist, als Kennwerte charakteristische Parameter einer Funktionsgleichung und/oder Informationen über den Funktionstyp zu ermitteln und zu übermitteln.

4. Beleuchtungsanordnung nach Anspruch 2 oder 3, **dadurch gekennzeichnet, dass** der Scheinwerfer (2a, 2b) einen Speicher aufweist, in dem Informationen über die Form der Kurve bzw. den Typ der Funktion abgelegt sind.

5. Beleuchtungsanordnung nach Anspruch 4, **dadurch gekennzeichnet, dass** die Steuer- und/oder Regelvorrichtung (1) geeignet und eingerichtet ist, als Kennwerte die Stützpunkte (P0, t0; P1, t1; P2, t2) der Kurve des zeitlichen Verlaufs bzw. die charakteristischen Parameter der Funktionsgleichung zu ermitteln und zu übermitteln.

6. Beleuchtungsanordnung nach einem der Ansprüche 2, 4 oder 5, **dadurch gekennzeichnet, dass** die Steuer- und/oder Regelvorrichtung (1) geeignet und eingerichtet ist, als Kennwerte Stützpunkte (P0, t0; P1, t1; P2, t2) des Kurvenverlaufs zu ermitteln und an den Feldbus (3) zu übergeben, und der Scheinwerfer (2a, 2b) geeignet und eingerichtet ist, Sollwerte (P) entsprechend eines linearen Kurvenverlaufs zwischen den Stützpunkten (P0, t0; P1, t1; P2, t2) zu ermitteln.

7. Beleuchtungsanordnung nach einem der Ansprüche 1 bis 6, **dadurch gekennzeichnet, dass** der Feldbus (3) ein LIN-Bus ist.

8. Beleuchtungsanordnung nach einem der Ansprüche 1 bis 6, **dadurch gekennzeichnet, dass** das der Feldbus (3) ein CAN-Bus ist.

## Claims

1. Lighting arrangement (B) for a motor vehicle with a device for controlling and/ or regulating (1), having at least one headlamp (2a,2b) and one field bus (3), which connects the headlamp (2a,2b) and the device for controlling and/ or regulating (1) for information exchange purposes, the device for controlling and/ or regulating (1) being suited and set to determine direct or indirect reference values (P) for the performance of the headlamp (2a,2b), the headlamp (2a.2b) being suited and set to take over the reference value determined by the device for controlling and/ or regulating (1),
**characterized in that** the device for controlling and/ or regulating (1) is suited and set to identify characteristic values for the temporal course of the reference values and to pass these characteristic values on to the field bus (3) by means of an interface, and **in that** the headlamp (2a/2b) is suited and set to take over the characteristic values from the field bus (3) by means of an interface, to identify the reference values (P) from the characteristic values for the temporal course of the reference values (P) and to adjust the performance of the headlamps (2a,2b) according to the reference values.

2. Lighting arrangement according to claim 1,
**characterized in that** the device for controlling and/ or regulating (1) is suited and set to identify and transmit points of a temporal course curve (P0; t0; P1; t1; P2; t2) and / or the shape of the temporal course curve as characteristic values.

3. Lighting arrangement according to claim 1 or 2,
**characterized in that** the characteristic values (P) belong to a function and that the device for controlling and/ or regulating (1) is suited and set to identify and transmit characteristic parameters of a function equation and/ or information on the type of function.

4. Lighting arrangement according to claim 2 or 3,
**characterized in that** the headlamp (2a,2b) has a memory in which information on the shape of the curve and/or the type of function is stored.

5. Lighting arrangement according to claim 4
**characterized in that** the device for controlling and/ or regulating (1) is suited and set to identify and transmit points (P0; t0; P1; t1; P2; t2) on the temporal course curve and/or the characteristic parameters of the function equation as characteristic values

6. Lighting arrangement according to one of the claims 2, 4 or 5,
**characterized in that** the device for controlling and/ or regulating (1) is suited and set to identify the points (P0; t0; P1; t1; P2; t2) of the curve as characteristic values and to transmit them to the field bus (3), and that the headlamp (2a,2b) is suited and set to identify reference values (P) following a linear curve progression between the points (P0; t0; P1; t1; P2; t2).

7. Lighting arrangement according to one of the claims 1 to 6,
**characterized in that** the field bus (3) is a LIN-bus.

8. Lighting arrangement according to one of the claims 1 to 6,
**characterized in that** the field bus (3) is a CAN-bus.

## Revendications

1. Ensemble d'éclairage (B) pour véhicules automobiles, avec un dispositif de commande et/ou de réglage (1), au moins un projecteur (2a, 2b) et un bus de terrain (3) par lequel le projecteur (2a, 2b) et le dispositif de commande et/ou de réglage (1) sont reliés pour échanger des informations, le dispositif de commande et/ou de réglage (1) étant approprié et ajusté à imposer les valeurs demandées (P) de manière directe ou indirecte pour la puissance du projecteur (2a, 2b), le projecteur (2a, 2b) étant approprié et ajusté à reprendre la valeur demandée imposée par le dispositif de commande et/ou de réglage (1),
**caractérisé en ce que** le dispositif de commande et/ou de réglage (1) est approprié et ajusté à déterminer les caractéristiques pour un profil temporel des valeurs demandées et à transmettre ces caractéristiques au bus de terrain (3) à l'intermédiaire d'une interface et que le projecteur (2a, 2b) est approprié et ajusté à reprendre les caractéristiques du bus de terrain (3) par une interface, à déterminer les valeurs demandées (P) au moyen des caractéristiques du profil temporel des valeurs demandées (P) et à régler la puissance des projecteurs (2a, 2b) selon les valeurs demandées (P).

2. Ensemble d'éclairage selon la revendication 1, **caractérisé en ce que** le dispositif de commande et/ou de réglage (1) est approprié et ajusté à déterminer et transmettre en tant que caractéristiques les points d'appui (P0, t0, P1, t1, P2, t2) d'une courbe du profil temporel et/ou la forme de la courbe du profil temporel.

3. Ensemble d'éclairage selon la revendication 1 ou 2, **caractérisé en ce que** les valeurs demandées (P) appartiennent à une fonction et que le dispositif de commande et/ou de réglage (1) est approprié et ajusté à déterminer et transmettre en tant que caractéristiques les paramètres caractéristiques d'une équation fonctionnelle et/ou les informations sur le type de fonctionnement.

4. Ensemble d'éclairage selon la revendication 2 ou 3, **caractérisé en ce que** le projecteur (2a, 2b) comporte une mémoire dans laquelle les informations sur la forme de la courbe respectivement le type de fonctionnement sont archivées.

5. Ensemble d'éclairage selon la revendication 4, **caractérisé en ce que** le dispositif de commande et/ou de réglage (1) est approprié et ajusté à déterminer et transmettre en tant que caractéristiques les points d'appui (P0, t0, P1, t1, P2, t2) de la courbe du profil temporel respectivement les paramètres caractéristiques de l'équation fonctionnelle.

6. Ensemble d'éclairage selon une des revendications 2, 4 ou 5, **caractérisé en ce que** le dispositif de commande et/ou de réglage (1) est approprié et ajusté à déterminer en tant que caractéristiques des points d'appui (P0, t0, P1, t1, P2, t2) de la courbe et à transmettre ceux-ci au bus de terrain (3), et que le projecteur (2a, 2b) est approprié et ajusté à déterminer les valeurs demandées (P) selon une courbe linéaire entre les points d'appui (P0, t0, P1, t1, P2, t2).

7. Ensemble d'éclairage selon une des revendications 1 à 6, **caractérisé en ce que** le bus de terrain (3) est un bus LIN.

8. Ensemble d'éclairage selon une des revendications 1 à 6, **caractérisé en ce que** le bus de terrain (3) est un bus CAN.
